# EUROPEAN PATENT SPECIFICATION

(11) **EP 2 966 143 B1**
(45) Date of publication and mention of the grant of the patent: **21.08.2019**
(21) Application number: 14290207.1
(22) Date of filing: 10.07.2014
(51) Int. Cl.: C09K 8/467, C04B 22/04, C04B 22/06, C04B 22/14, C04B 28/02

(54) **Methods for well cementing**
Verfahren zur Bohrlochzementierung
Procédés pour la cimentation de puits

(43) Date of publication of application: 13.01.2016
(73) Proprietor: Services Pétroliers Schlumberger, 75007 Paris (FR); Schlumberger Holdings Limited, Road Town, Tortola 1110 (VG); Schlumberger Technology B.V., 2514 JG The Hague (NL)
(72) Inventor: Michaux, Michel, 92140 Clamart (FR); Terrier, Cyril, 92140 Clamart (FR)
(74) Representative: Schlumberger Intellectual Property Department

(56) References cited:
- EP-A1- 2 055 686
- WO-A1-90/11977
- WO-A1-2012/160340
- GB-A- 2 212 489
- US-A1- 2012 152 541

## Description

### BACKGROUND

The statements in this section merely provide background information related to the present disclosure and may not constitute prior art.

This disclosure relates to compositions and methods for serving subterranean wells, in particular, cement systems that possess improved mechanical properties and lower permeability, and methods by which they are applied as cements in both primary and remedial cementing operations.

Primary cementing in a cased oil, gas, or water well is the process of placing cement in the annulus between the casing and the formations through which the wellbore passes, or between two casing strings. The set cement provides zonal isolation, which is the prevention of fluid flow between different formation layers. Good bonding between set cement and casing and between set cement and the formation leads to effective zonal isolation. Poor bonding limits production and reduces the effectiveness of stimulation treatments.

Bonding and zonal isolation may be adversely affected by various events that may occur during the life of a well. Expansion or contraction of the casing may result from pressure fluctuations during stimulation operations, or temperature changes owing to cement hydration or the pumping of fluids into or out of the well. Mechanical disturbances resulting from various well intervention operations or tectonic movement may also have negative consequences with regard to cement sheath integrity.

To counteract the vulnerability of cement sheath to the hazards discussed above, the industry has developed cement systems that have improved flexibility, tensile strength or toughness or a combination thereof. Many of the improved cement systems may contain flexible additives, including elastomer particles. Other cements may contain fibers that may provide mechanical reinforcement. Yet other cements may be foamed to improve flexibility.

Document GB 2 212 489 A discloses hydraulic cement slurries for cementing of oil wells having a solid volume fraction (SVF) in the range of from 0.44 to 0.48. Document EP 2 055 686 A1 discloses cement slurry for use in wellbore operations, with values of SVF of 0.41.

### SUMMARY

The present disclosure describes improved flexible cement compositions and methods for applying them in subterranean wells.

In an aspect, embodiments relate to methods for cementing a subterranean well. A cement slurry is prepared that comprises water and a blend comprising an inorganic cement and at least one mineral. The slurry has a solid volume fraction between 0.30 and 0.40, and the cement is present at a concentration between 30% and 70% by volume of blend. The slurry is placed into the well and allowed to harden and set.

In a further aspect, embodiments relate to methods for preparing a cement slurry. A composition is mixed that comprises water and a blend comprising an inorganic cement and at least one mineral. The slurry has a solid volume fraction between 0.30 and 0.40, and the cement is present at a concentration between 30% and 70% by volume of blend.

### DETAILED DESCRIPTION

The present invention is a method for cementing a subterranean well according to claim 1. The present disclosure will be described in terms of treatment of vertical wells, but is equally applicable to wells of any orientation. The disclosure will be described for hydrocarbon-production wells, but it is to be understood that the disclosed methods can be used for wells for the production of other fluids, such as water or carbon dioxide, or, for example, for injection or storage wells.

In this disclosure, the tubular body may be any string of tubulars that may be run into the wellbore and at least partially cemented in place. Examples include casing, liner, solid expandable tubular, production tubing and drill pipe.

An example of a flexible cement system is FlexSTONE™ technology, available from Schlumberger. FlexSTONE cements contain elastomeric particles at concentrations such that the particles occupy a substantial amount of volume of the set cement matrix. The particles may be considered to be part of the porosity of the cement matrix because they are largely inert and may contribute little to the strength of the set cement. The role of the particles includes increasing the solid volume fraction (SVF) of the cement slurry in order to decrease the permeability of the set cement. Set cements with low permeability (e.g., < 0.1 mD) may be better suited to provide and maintain zonal isolation in the well.

FlexSTONE™ cements are an example of an engineered particle size cement system. The cement blend is composed of coarse, medium-size and fine particles. The coarse particles may be present at a concentration of 55% by volume of blend (BVOB), medium-size particles at a concentration of 35% BVOB and fine particles at a concentration of 10% BVOB. The solid volume fraction (SVF) of such cement slurries may be between 0.55 and 0.60. The particle sizes may be chosen such that the medium-size particles fit within the interstices between the coarse particles, and the fine particles fit within the interstices between the medium-size particles.

Improved set cement flexibility may also be achieved by increasing the water concentration; however, the permeability of the resulting set cement may be too high, particularly if the bottomhole temperature exceeds 110°C.

Applicant has determined that it is possible to prepare flexible cement systems at densities at least within the density range between 1560 kg/m³ and 2400 kg/m³ by incorporating at least one mineral to a cement blend. Owing to a high water-to-cement ratio, improved flexibility of the set cement is achieved, while maintaining permeability equal to or less than 0.1 mD.

In an aspect, embodiments relate to methods for cementing a subterranean well. A cement slurry is prepared that comprises water and a blend comprising an inorganic cement and at least one mineral. The slurry has a solid volume fraction between 0.30 and 0.40, and the cement is present at a concentration between 30% and 70% by volume of blend. The slurry is placed into the well and allowed to harden and set. The cement may be present at a concentration between 40% and 60% by volume of blend.

In a further aspect, embodiments relate to methods for preparing a cement slurry. A composition is mixed that comprises water and a blend comprising an inorganic cement and at least one mineral. The slurry has a solid volume fraction between 0.30 and 0.40, and the cement is present at a concentration between 30% and 70% by volume of blend. The cement may be present at a concentration between 40% and 60% by volume of blend.

For both aspects, the composition may have a water-to-cement ratio between 0.7 and 1.5 by weight. The water may be fresh water, sea water or waters to which salts have been added at concentrations up to saturation.

For both aspects, the set cement may have a Young's modulus between 1.0 GPa and 6.0 GPa, or between 2.0 GPa and 4.0 GPa.

For both aspects, the at least one mineral may comprise metallic iron, metal oxides, sulfates, phosphates or carbonates or combinations thereof. The metal oxides may comprise haussmanite (SG = 4.9), ilmenite (SG = 4.5), hematite (SG = 4.9), titanium oxide (SG = 4.15), aluminum oxide (SG = 4.0) or silicon dioxide (SG = 2.65) or combinations thereof. The silicon dioxide may be present as microsilica or silica fume. The sulfates may comprise barite (SG = 4.3). The carbonates may comprise calcite (SG = 2.7), aragonite, vaterite, dolomite or magnesite or combinations thereof. The phosphates may comprise calcium phosphates or magnesium phosphates or combinations thereof; for example, apatite, struvite or newberyite.

At concentrations exceeding about 5% BVOB, the presence of microsilica or silica fume may prevent particle sedimentation. Further, the microsilica or silica fume may react with calcium hydroxide to form additional calcium silicate hydrate. This pozzolanic reaction may further reduce the permeability of the set cement. Yet further, the microsilica or silica fume may enhance fluid-loss control during slurry placement.

As for conventional portland cement slurries, 35% to 40% by weight of cement (BWOC) silica flour may be added to prevent the formation of alpha dicalcium silicate hydrate if the cement is cured at temperatures exceeding 110°C. Formation of this mineral is known in the art to reduce strength and increase permeability. The additional silica promotes the formation of the mineral tobermorite (1.1 nm) at temperatures up to about 170°C, and the mineral xonotlite at temperatures up to at least 350°C. Tobermorite (1.1 nm) and xonotlite are known in the art to be associated with higher strength and lower permeability. Microsilica and silica fume may also be used for this purpose.

For both aspects, the at least one mineral may be present at a concentration between 30% and 70% by volume of blend, or between 40% and 60% by volume of blend.

For both aspects, the set cement may have a permeability to water that is lower than 0.1 mD.

For both aspects, the slurry may have a density that is between 1560 kg/m³ and 2400 kg/m³. The density may be varied by selecting an appropriate mineral or blend of minerals. Or, the SVF may be varied as long as this value remains between 0.3 and 0.4. Depending on the amount of cementitious material in the blend, the Young's modulus may be too high if the SVF exceeds 40%, and the permeability of the set cement may be too high if the SVF is lower than 30%.

For all aspects, the slurry may be substantially free of foam. For all aspects, the slurry may be substantially free of elastomeric particles. For all aspects, the slurry may be substantially free of both foam and elastomeric particles. As used herein, "substantially free" means less than 5% by volume, or less than 3% by volume, of the foam and/or elastomeric particles in the slurry.

For all aspects, the inorganic cement may comprise portland cement, calcium aluminate cement, fly ash, blast furnace slag, lime-silica blends, zeolites, pozzolans, magnesium oxychloride, geopolymers or chemically bonded phosphate ceramics or combinations thereof.

For all aspects, the cement slurry may further comprise accelerators, retarders, dispersants, fluid-loss additives, anti-settling agents, gas migration prevention agents, expansion agents, anti-gelling agents or antifoam agents or combinations thereof. The slurry may also be substantially free of hydrophobic particles.

### EXAMPLE

The following example is provided to more fully illustrate the disclosure. This example is not intended to limit the scope of the disclosure in any way.

The experiments described below were performed in accordance with recommended procedures published by the American Petroleum Institute (API) in Publication Number RP-10B.

Cement slurries were prepared in a standard rotational mixer, then conditioned at ambient temperature for 30 min in an atmospheric consistometer. The slurries were then degassed and placed in a pressurized curing chamber. Within four hours, the temperature and pressure in the curing chamber were increased linearly from 25°C to 85°C and 0 MPa to 20.7 MPa. The temperature and pressure were maintained for six days, after which the setcement specimens were removed from the curing chamber. Cylinders were drilled out of the cement specimens. The dimensions were 1 in. (2.54 cm) diameter and 2 in. (5.08 cm) length.

Mechanical properties (compressive strength and Young's modulus) were measured at room temperature and pressure. Water permeability tests were performed at room temperature with a confining pressure of 2.75 MPa. The results are presented in Table 1.

**Table 1. Cement blend compositions illustrating the disclosure.**

| **SVF** | **0.35** | **0.30** | **0.30** | **0.35** | **0.40** |
|---|---|---|---|---|---|
| **Cementitious material to inert mineral ratio (by volume)** | - | 60/40 | 60/40 | 60/40 | 50/50 |
| Water to cement ratio (by mass) | 0.56 | 1.20 | 1.20 | 0.95 | 0.94 |
| Effective porosity [%] | 38.2 | 57.0 | 55.5 | 47.9 | 45 |
| Sample reference | 1 | 2 | 3 | 4 | 5 |

| Blend Composition | | | | | |
|---|---|---|---|---|---|
| Cement Class G [%BVOB] | 100.0 | 60.0 | 55.0 | 55.0 | 45.0 |
| **Manganese tetraoxide** [%BVOB] | - | 20.0 | - | 40.0 | - |
| **Barium sulfate** [%BVOB] | - | - | - | - | 50.0 |
| **Calcium carbonate** [%BVOB] | - | 20.0 | 40.0 | - | - |
| **Silica fume** [%BVOB] | - | | 5.0 | 5.0 | 5.0 |
| **Density** [kg/m³] | 1772 | 1735 | 1587 | 1994 | 2094 |

| Additives | | | | | |
|---|---|---|---|---|---|
| **Antifoam agent** [L/t] | 4.0 | 4.0 | 4.0 | 4.0 | 4.0 |
| **Naphthalene sulfonate dispersant** [Ut] | 4.4 | 5.8 | 8.3 | 8.3 | 11.7 |
| **Cellulosic extender** [L/t] | 8.9 | 12.5 | 10.0 | 6.7 | 3.3 |
| Water | | Fresh | | | |

| Mechanical Properties | | | | | |
|---|---|---|---|---|---|
| **CS - crush** [MPa] | 27.2 | 6.4 | 5.9 | 12 | 13.7 |
| **Young's Modulus** [GPa] | 7.8 | 1.9 | 2.2 | 3.3 | 3.9 |
| **Permeability** [mD] | 0.01 | 0.064 | 0.031 | 0.011 | 0.014 |

Sample 1 was a blend made from 100% cement. Samples 2-5 contained minerals at various ratios, and the SVF varied from 0.30 to 0.40. The slurry densities varied between 1587 kg/m³ and 2094 kg/m³. Inspection of the data reveals that the samples containing minerals had lower Young's moduli, yet permeabilites in the acceptable range were maintained.

Although the above description is provided in the context of wellbore cementing, it is to be understood that embodiments disclosed in this document can be adapted for use in non-wellbore cementing applications as well, for example, in the general construction industry.

Although various embodiments have been described with respect to enabling disclosures, it is to be understood that this document is not limited to the disclosed embodiments. Variations and modifications that would occur to one of skill in the art upon reading the specification are also within the scope of the disclosure, which is defined in the appended claims.

## Claims

1. A method for cementing a subterranean well, comprising:
(i) preparing a cement slurry comprising water and a blend consisting of an inorganic cement being Portland cement and at least one mineral; the at least one mineral comprising metallic iron, metal oxides selected from the group consisting of haussmanite, ilmenite, hematite, titanium dioxide and combinations thereof, metal sulfates or metal carbonates or combinations thereof; and wherein the mineral is present at a concentration between 30% and 70% by volume of the blend, wherein the slurry has a solid volume fraction between 0.30 and 0.40 and wherein the slurry has a density between 1560 kg/m³ and 2400 kg/m³ and the cement is present at a concentration between 30% and 70% by volume of blend;
(ii) placing the slurry into the well; and
(iii) allowing the slurry to harden and form a set cement,
wherein the set cement has a Young's modulus between 1.0 GPa and 6.0 GPa, and the set cement has a water permeability lower than 0.1 mD.

2. The method of claim 1, wherein the water-to-cement ratio is between 0.7 and 1.5 by weight.

3. The method of any one of claims 1-2, wherein the cement slurry is mixed continuously.

4. The method of any one of claims 1-3, wherein the slurry is free of foam.

## Patentansprüche

1. Verfahren zum Zementieren eines unterirdischen Bohrlochs, umfassend:
(i) Herstellen einer Zementschlämme, die Wasser und eine Mischung bestehend aus einem anorganischen Zement, bei dem es sich um Portlandzement handelt, und wenigstens einem Mineral umfasst; wobei das wenigstens eine Mineral metallisches Eisen, Metalloxide ausgewählt aus der Gruppe bestehend aus Hausmannit, Ilmenit, Hämatit, Titandioxid und Kombinationen davon, Metallsulfate oder Metallkarbonate oder Kombinationen davon umfasst; und wobei das Mineral in einer Konzentration zwischen 30 Vol.-% und 70 Vol.-% der Mischung vorliegt, wobei die Schlämme einen Feststoffvolumenanteil zwischen 0.30 und 0.40 aufweist, und wobei die Schlämme eine Dichte zwischen 1560 kg/m³ und 2400 kg/m³ aufweist und der Zement in einer Konzentration zwischen 30 Vol.-% und 70 Vol.-% der Mischung vorliegt;
(ii) Einbringen der Zementschlämme in die Bohrung; und
(iii) Aushärtenlassen der Schlämme, und die Schlämme einen abgebundenen Zement ausbilden lassen,
wobei der abgebundene Zement ein Elastizitätsmodul zwischen 1.0 und 6.0 GPa aufweist, und der abgebundene Zement eine Wasserpermeabilität von niedriger als 0.1 mD aufweist.

2. Verfahren nach Anspruch 1, wobei das Gewichtsverhältnis von Wasser zu Zement zwischen 0.7 und 1.5 liegt.

3. Verfahren nach einem der Ansprüche 1-2, wobei die Zementschlämme kontinuierlich gemischt wird.

4. Verfahren nach einem der Ansprüche 1-3, wobei die Zementschlämme frei von Schaum ist.

## Revendications

1. Procédé de cimentation de puits souterrain, consistant à :
(i) préparer un coulis de ciment comprenant de l'eau et un mélange composé d'un ciment inorganique, étant du ciment Portland, et d'au moins un minéral comprenant du fer métallique, des oxydes métalliques choisis dans le groupe constitué par l'haussmanite, l'ilménite, l'hématite, le dioxyde de titane et des combinaisons de ceux-ci, des sulfates métalliques ou des carbonates métalliques ou des combinaisons de ceux-ci; et le minéral étant présent à une concentration comprise entre 30 % et 70 % en volume du mélange, le coulis ayant une fraction volumique solide comprise entre 0.30 et 0.40, le coulis ayant une densité comprise entre 1560 kg/m³ et 2400 kg/m³ et le ciment étant présent à une concentration comprise entre 30 % et 70 % en volume de mélange ;
(ii) placer le coulis dans le puits; et
(iii) permettre au coulis de durcir et de former un ciment pris,
le ciment pris ayant un module de Young compris entre 1.0 GPa et 6.0 GPa, et le ciment pris ayant une perméabilité à l'eau inférieure à 0.1 mD.

2. Procédé selon la revendication 1, dans lequel le rapport eau-ciment est compris entre 0.7 et 1.5 en poids.

3. Procédé selon l'une quelconque des revendications 1 à 2, dans lequel le coulis de ciment est mélangé en continu.

4. Procédé selon l'une quelconque des revendications 1 à 3, dans lequel le coulis est exempt de mousse.
